# EUROPEAN PATENT APPLICATION

(11) **EP 2 811 696 A1**
(43) Date of publication of application: **10.12.2014**
(21) Application number: 12867669.9
(22) Date of filing: 30.01.2012
(51) Int. Cl.: H04L 12/44

(54) **TRAIN-INFORMATION MANAGEMENT DEVICE AND METHOD FOR SELECTING CONTROL SOFTWARE THEREFOR**

(71) Applicant: Mitsubishi Electric Corporation, Tokyo 100-8310 (JP)
(72) Inventor: KADONO, Toshiko, Tokyo 100-8310 (JP); IKEJIMA, Tomoaki, Tokyo 100-8310 (JP); SAWA, Takuya, Tokyo 100-8310 (JP); KOMURA, Tetsuo, Tokyo 100-8310 (JP); TATSUMI, Shogo, Tokyo 100-8310 (JP); HONDA, Shingo, Tokyo 100-8310 (JP); MIYAUCHI, Takashi, Tokyo 100-8310 (JP)
(74) Representative: Zech, Stefan Markus
(86) International application number: PCT/JP2012/052031
(87) International publication number: WO 2013/114543

(57) **Abstract**

Train information managing apparatuses each include a plurality of pieces of control software of versions different from each other. The train information managing apparatus mounted on a head car compares version information of software for devices collected concerning all devices in a formation and version correspondence information included in each of the plurality of pieces of control software, discriminates control software including version correspondence information consistent with the version information of the software for devices concerning all the devices in the formation, when the discriminated control software is different from already-started control software, selects and starts the discriminated control software, and transmits a switching command for switching from the already-started control software to the discriminated control software to a train information managing apparatus mounted on another car.

## Description

### Field

The present invention relates to a train information managing apparatus and a selection method for control software of the train information managing apparatus.

### Background

A train information managing apparatus includes central apparatuses and terminal apparatuses. The central apparatuses are respectively mounted on a head car and a tail car of a train. The terminal apparatuses are respectively mounted on the other intermediate cars. The central apparatuses and the terminal apparatuses are communicatively connected to each other by a trunk transmission line wired among the cars. The central apparatuses and the terminal apparatuses respectively collect and manage state data of devices in the cars in which the own apparatuses are mounted, transmit and receive the collected state data each other by inter-car communication via the trunk transmission line, and share the collected data (see, for example, Patent Literature 1). The train information managing apparatus can individually control the respective devices.

The train information managing apparatus operates according to predetermined control software. Software is also used in the devices in the cars. When functions related to each other in the control software of the train information managing apparatus and the software used in the devices are improved, it is necessary to simultaneously update the control software and the software to secure their consistencies.

### Citation List

### Patent Literature

Patent Literature 1: Japanese Patent Application Laid-Open No. 2002-127905

### Summary

### Technical Problem

However, actually, it is likely that the functions are improved without synchronizing the control software of the train information managing apparatus and the software used in the devices because of some mistake or the like. In that case, consistency of versions cannot be achieved between the control software of the train information managing apparatus and the software used in the devices, causing a deficiency.

The present invention has been devised in view of the above and it is an object of the present invention to provide a train information managing apparatus and a selection method for control software of the train information managing apparatus capable of preventing a situation in which consistency of versions cannot be attained between control software of the train information managing apparatus and software used in devices and a deficiency occurs.

### Solution to Problem

In order to solve above-mentioned problems and achieve the object, a train information managing apparatus related to the present invention is a train information managing apparatus that is mounted on each of cars of a formation of a train, that collects device information from a device in its own car, that transmits and receives the device information to and from another train information managing apparatus via a trunk transmission line wired among the cars, and that shares the device information with another train information apparatus and manages the device information, the apparatus including: a storing unit that stores a plurality of pieces of control software that are software of versions different from each other applied to the train information managing apparatus and that each include version correspondence information that gives, for each piece of software for devices used in devices in the formation, version information of the software for devices corresponding to a version of own software; and a control processing unit that collects version information of the software for devices from devices in its own car, transmits the version information of the software for devices to another train information managing apparatus via the trunk transmission line, has a function of selecting one piece of control software common among the cars out of the plurality of pieces of control software stored in the storing unit and starting the control software, and operates according to the selected control software after the start, wherein the control processing unit of the train information managing apparatus mounted on a head car of the formation compares version information of the software for devices concerning all the devices in the formation and version correspondence information included in each of the plurality of pieces of control software stored in the storing unit, discriminates control software including version correspondence information consistent with the version information of the software for devices concerning all the devices in the formation, when the discriminated control software is different from already-started control software, selects and starts the discriminated control software, and transmits a switching command for switching from the already-started control software to the discriminated control software to a train information managing apparatus mounted on another car.

### Advantageous Effects of Invention

According to the present invention, it is possible to prevent a situation in which consistency of versions cannot be attained between the control software of the train information managing apparatus and the software for the devices and a deficiency occurs.

### Brief Description of Drawings

FIG. 1 is a diagram of an example of a formation of a train in which train information managing apparatuses according to an embodiment are mounted.
FIG. 2 is a sequence chart of an overview of communication processing between a central apparatus 1 and a device 3 in a car in which the central apparatus 1 is mounted.
FIG. 3 is a sequence chart of an overview of communication processing between a terminal apparatus 2 and the device 3 in a car in which the terminal apparatus 2 is mounted.
FIG. 4 is a diagram of an example of the internal configuration of the central apparatus 1.
FIG. 5 is a diagram of an example of the internal configuration of the terminal apparatus 2.
FIG. 6 is a diagram of an example of content of state data (device information).
FIG. 7 is a diagram of an example of content of control software.
FIG. 8 is a flowchart explaining an operation in the embodiment.

### Description of Embodiments

An embodiment of a train information managing apparatus and a selection method for control software of the train information managing apparatus according to the present invention is explained in detail below with reference to the drawings. Note that the present invention is not limited by the embodiment.

### Embodiment.

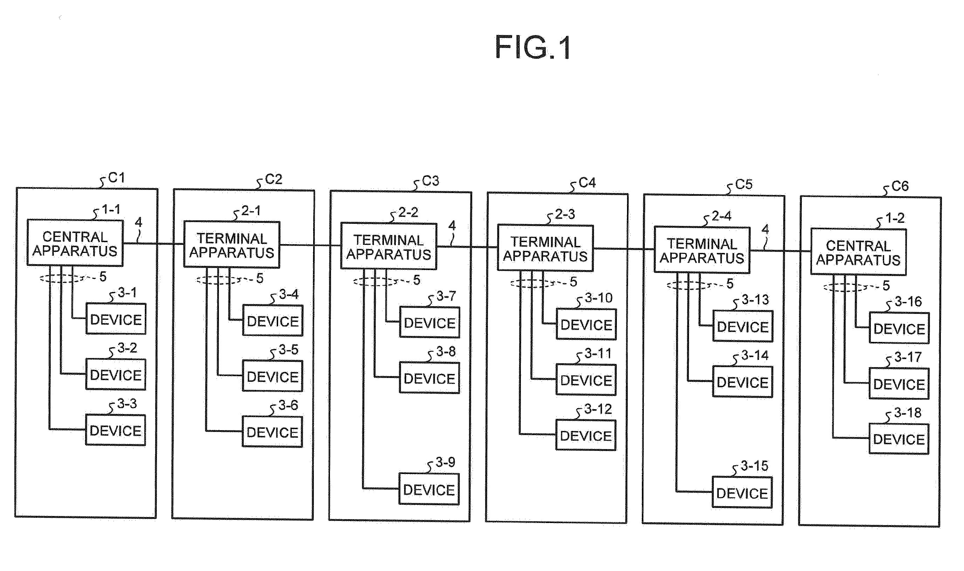

FIG. 1 is a diagram of an example of a formation of a train in which train information managing apparatuses according to an embodiment are mounted. In FIG. 1, the formation of the train includes, for example, six cars, specifically, cars C1 to C6. Note that it goes without saying that the number of cars is not limited to the example shown in the figure.

In the cars C1 and C6, which are cars at both ends of the formation, central apparatuses 1-1 and 1-2, which are the train information managing apparatus, are respectively mounted. In the cars C2 to C5, which are intermediate cars, terminal apparatuses 2-1 to 2-4, which are the train information managing apparatus, are respectively mounted. In the following explanation, for example, the car C1 is a head car and the car C6 is the tail car. The central apparatuses 1-1 and 1-2 and the terminal apparatuses 2-1 to 2-4 are communicatively connected to each other via a trunk transmission line (an inter-car transmission line) 4 wired among the cars.

In the car C1, the central apparatus 1-1 and, for example, three devices 3-1 to 3-3 each connected to the central apparatus 1-1 via a branch transmission line (an inter-car transmission line) 5 are mounted. Note that it goes without saying that the number of the set devices is an example and is not limited to this number. The branch transmission line 5 is a communication path wired among the cars. The central apparatus 1-1 collects device information (state data) from the devices 3-1 to 3-3. The devices 3-1 to 3-3 represent, for example, a trunk controller, a braking device, and an air conditioner.

In the car C2, the terminal apparatus 2-1 and, for example, three devices 3-4 to 3-6 each connected to the terminal apparatus 2-1 via the branch transmission line 5 are mounted. Note that it goes without saying that the number of the set devices is an example and is not limited to this number. The terminal apparatus 2-1 collects device information (state data) from the devices 3-4 to 3-6. The devices 3-4 to 3-6 represent, for example, a braking device, a propulsion device, a motor, and an air conditioner.

In the car C3, the terminal apparatus 2-2 and, for example, three devices 3-7 to 3-9 each connected to the terminal apparatus 2-2 via the branch transmission line 5 are mounted. Note that it goes without saying that the number of the set devices is an example and is not limited to this number. The terminal apparatus 2-2 collects device information (state data) from the devices 3-7 to 3-9. The devices 3-7 to 3-9 represent, for example, a motor and an air conditioner.

The car C4 has, for example, the same configuration as the configuration of the car C2. That is, in the car C4, the terminal apparatus 2-3 and, for example, three devices 3-10 to 3-12 each connected to the terminal apparatus 2-3 via the branch transmission line 5 are mounted.

The car C5 has, for example, the same as the configuration of the car C3. That is, in the car C5, the terminal apparatus 2-4 and, for example, three devices 3-13 to 3-15 each connected to the terminal apparatus 2-4 via the branch transmission line 5 are mounted.

The car C6 has, for example, the same configuration as the configuration of the car C1. That is, in the car C6, the central apparatus 1-2 and, for example, three devices 3-16 to 3-18 each connected to the central apparatus 1-2 via the branch transmission line 5 are mounted.

Note that, in the following explanation, central apparatuses 1 collectively represent the central apparatuses 1-1 and 1-2, terminal apparatuses 2 collectively represent the terminal apparatuses 2-1 to 2-4, and devices 3 collectively represent the devices 3-1 to 3-18.

The central apparatuses 1 and the terminal apparatuses 2 operate according to control software. Software for devices is used also in each of the devices 3.

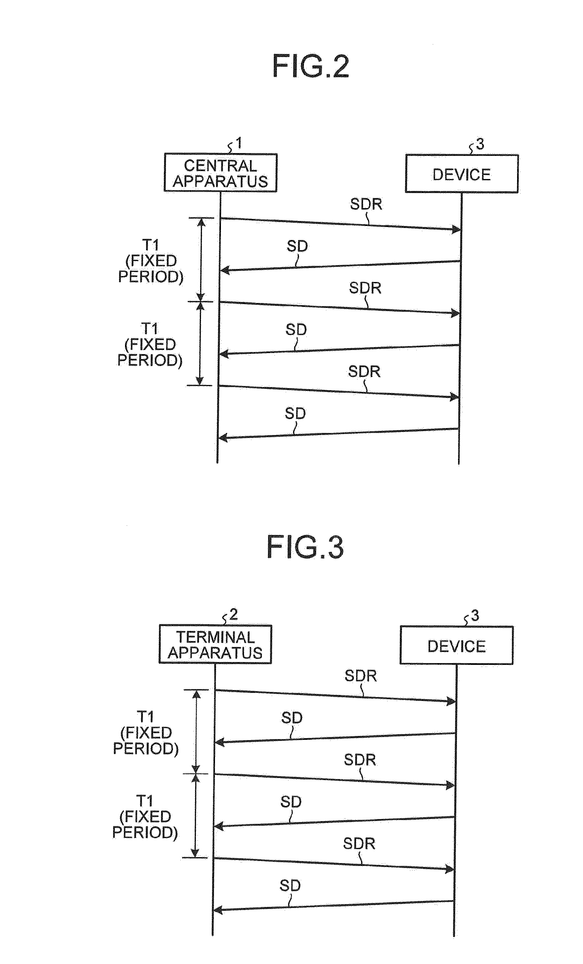

FIG. 2 is a sequence chart of an overview of communication processing between the central apparatus 1 and the device 3 in a car in which the central apparatus 1 is mounted. The central apparatus 1 transmits a state data request signal SDR to the device 3 in its own car, for example, at a fixed period T1. The state data request signal SDR is a signal for requesting the device 3 to transmit state data (device information). When the device 3 receives the state data request signal SDR from the central apparatus 1, the device 3 returns state data at that point to the central apparatus 1 as a state data signal SD. That is, the state data signal SD is a response signal to the state data request signal SDR. In returning the state data, the device 3 transmits the state data signal SD including version information of the software for devices used in the device 3 to the central apparatus 1. Between the central apparatus 1 and the device 3, the transmission of the state data request signal SDR and the return of the state data signal SD responding to the state data request signal SDR are repeatedly performed at the fixed period T1.

FIG. 3 is a sequence chart of an overview of communication processing between the terminal apparatus 2 and the device 3 in the car in which the terminal apparatus 2 is mounted. The communication processing shown in FIG. 3 is the same as the communication processing shown in FIG. 2. That is, the terminal apparatus 2 transmits the state data request signal SDR to the device 3 in its own car, for example, at the fixed period T1. When the device 3 receives the state data request signal SDR from the terminal apparatus 2, the device 3 returns state data at that point to the terminal apparatus 2 as the state data signal SD. In returning the state data, the device 3 transmits the state data signal SD including version information of the software for devices used in the device 3 to the terminal apparatus 2. Between the terminal apparatus 2 and the device 3, the transmission of the state data request signal SDR and the return of the state data signal SD responding to the state data request signal SDR are repeatedly performed at the fixed period T1.

The terminal apparatus 2 transmits the state data collected concerning the device 3 in its own car to the other terminal apparatuses 2 and the central apparatuses 1 via the trunk transmission line 4. The central apparatus 1 transmits the state data collected concerning the device in its own car to the terminal apparatuses 2 and the other central apparatus 1 via the trunk transmission line 4. In this way, the central apparatuses 1 and the terminal apparatuses 2 can share the state data of the devices 3 in the train each other. The central apparatuses 1 and the terminal apparatuses 2 also share various kinds of train information other than the state data of the devices 3 each other (concerning the train information, see, for example, Patent Literature 1).

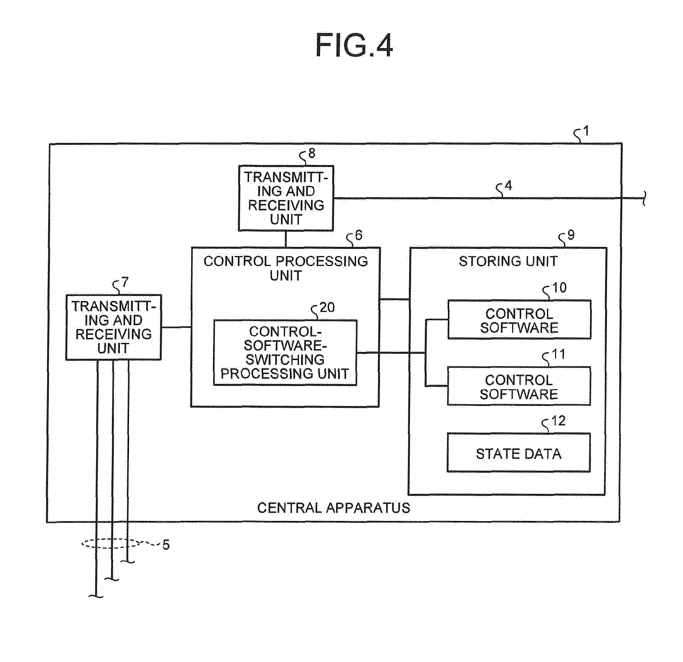

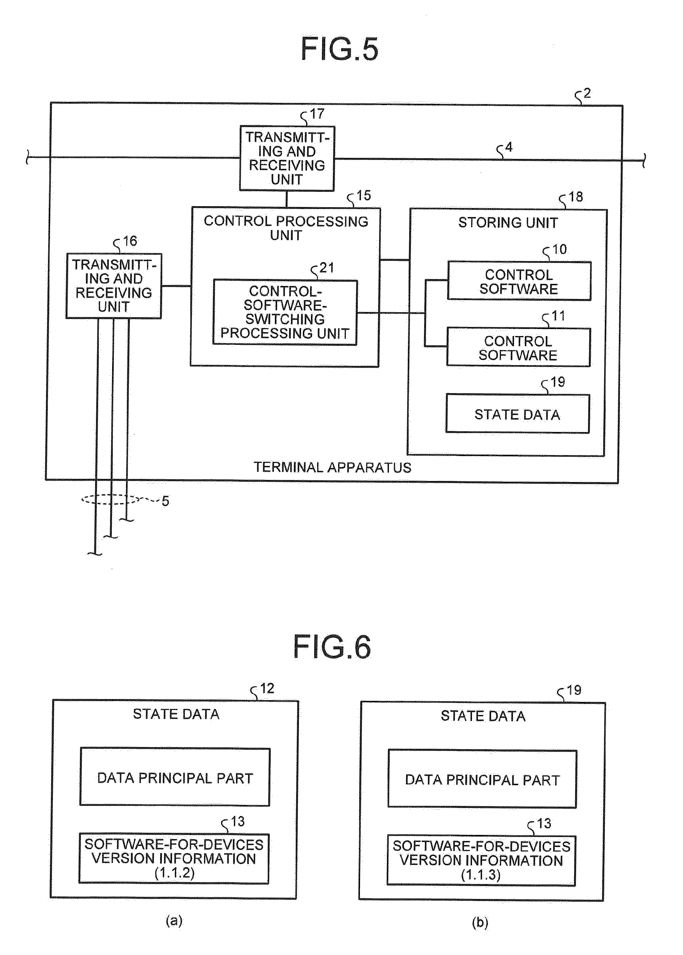

FIG. 4 is a diagram of an example of the internal configuration of the central apparatus 1. FIG. 5 is a diagram of an example of the internal configuration of the terminal apparatus 2.

First, the configuration of the central apparatus 1 is explained. As shown in FIG. 4, the central apparatus 1 includes a control processing unit 6, a storing unit 9 connected to the control processing unit 6, a transmitting and receiving unit 8 connected to the control processing unit 6 and capable of performing transmission and reception of data between the cars via the trunk transmission line 4, and a transmitting and receiving unit 7 connected to the control processing unit 6 and capable of performing transmission and reception of data in the car via branch transmission line 5.

In the storing unit 9, new and old two pieces of control software 10 and 11 of versions different from each other and state data 12 are stored. Note that, in the storing unit 9, train information other than the state data 12 is also stored. The control processing unit 6 includes, as a functional component thereof, a control-software-switching processing unit 20 that can switch between the control software 10 and the control software 11 and start the central apparatus 1.

The control processing unit 6 transmits the state data request signal SDR to the devices 3 in its own car via the transmitting and receiving unit 7. The control processing unit 6 receives the state data signal SD returned from the devices 3 via the transmitting and receiving unit 7 and stores the state data 12 included in the state data signal SD in the storing unit 9. The control processing unit 6 transmits the state data 12 of the devices 3 collected in its own car to the terminal apparatuses 2 and the other central apparatus 1 via the transmitting and receiving unit 8.

The control processing unit 6 is realized by hardware such as a CPU and a main memory and operates according to either one of the control software 10 and the control software 11. That is, the central apparatus 1 loads selected one of the control software 10 and 11 stored in the storing unit 9 to the main memory and starts the control software to thereby operate according to an execution file of the selected control software. The control software 10 and the control software 11 are software for control applied to the train information managing apparatus and can control the central apparatus 1 independently from each other. Selection processing for the control software 10 and the control software 11 is executed by the control-software-switching processing unit 20 of the control processing unit 6. Details of the switching processing by the control-software-switching processing unit 20 are explained later.

The configuration of the terminal apparatus 2 is explained. The configuration of the terminal apparatus 2 is the same as the configuration of the central apparatus 1. That is, as shown in FIG. 5, the terminal apparatus 2 includes a control processing unit 15, a storing unit 18 connected to the control processing unit 15, a transmitting and receiving unit 17 connected to the control processing unit 15 and capable of performing transmission and reception of data between the cars via the trunk transmission line 4, and a transmitting and receiving unit 16 connected to the control processing unit 15 and capable of performing transmission and reception of data in the car via the branch transmission line 5.

In the storing unit 18, as in the storing unit 9, the control software 10 and the control software 11 are stored and state data 19 is further stored. Note that, in the storing unit 18, train information other than the state data 19 is also stored. The control processing unit 15 includes, as a functional component thereof, a control-software-switching processing unit 21 that can switch between the control software 10 and the control software 11 and start the terminal apparatus 2.

The control processing unit 15 transmits the state data request signal SDR to the devices 3 in its own car via the transmitting and receiving unit 16. The control processing unit 15 receives the state data signal SD returned from the devices 3 via the transmitting and receiving unit 16 and stores the state data 19 included in the state data signal SD in the storing unit 18. The control processing unit 15 transmits the state data 19 of the devices 3 collected in its own car to the other terminal apparatuses 2 and the central apparatuses 1 via the transmitting and receiving unit 17.

The control processing unit 15 is realized by hardware such as a CPU and a main memory and operates according to either one of the control software 10 and the control software 11 that is the same as the control software selected by the central apparatus 1. That is, the terminal apparatus 2 loads selected one of the control software 10 and the control software 11 stored in the storing unit 18 to the main memory and starts the control software to thereby operate according to an execution file of the control software common to the control software loaded by the central apparatus 1. The control software 10 and the control software 11 can control the terminal apparatuses 2 independently from each other. In this way, the selected control software is common among the cars. Selection processing for the control software 10 and the control software 11 is executed by the control-software-switching processing unit 21 of the control processing unit 15. Details of the switching processing by the control-software-switching processing unit 21 are explained later.

FIG. 6 is a diagram of an example of content of state data (device information). In FIG. 6(a), an example of content of the state data 12 is shown. The state data 12 includes software-for-devices version information 13 in addition to a data main section representing a principal part of the device information. The software-for-devices version information 13 represents version information of software for devices used in the device 3 that transmits the state data 12. In the example shown in the figure, the software-for-devices version information 13 is, for example, a version "1.1.2". Note that, in the state data 12, other information, such as header information, is also included. However, the other information is not shown in the figure. In FIG. 6(b), an example of content of the state data 19 is shown. The state data 19 is the same as the state data 12. That is, the state data 19 includes the software-for-devices version information 13 in addition to a data main section representing a principal part of the device information. In this case, the software-for-devices version information 13 is, for example, a version "1.1.3".

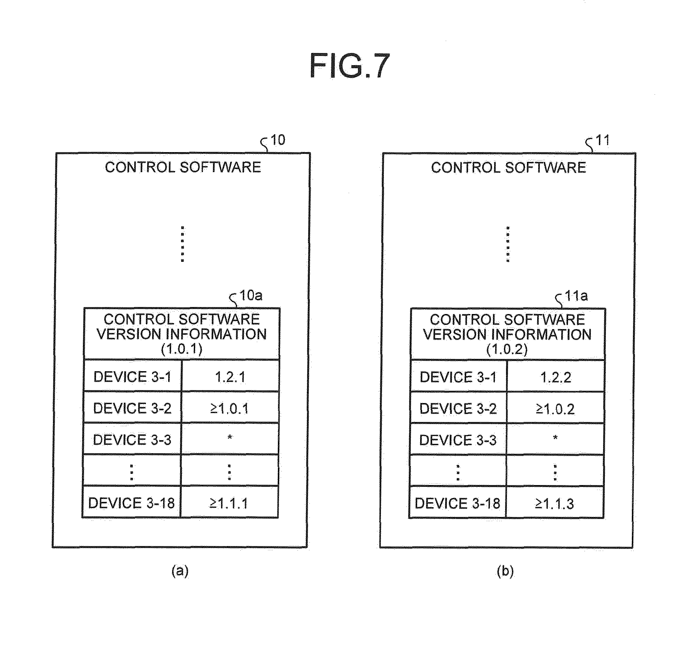

FIG. 7 is a diagram of an example of content of control software. In FIG. 7(a), an example of content of the control software 10 is shown. In FIG. 7(b), an example of content of the control software 11 is shown. As shown in FIG. 7(a), in the control software 10, version correspondence information 10a is included besides a principal command code. In the version correspondence information 10a, control software version information, which is own version information of the control software 10, and version information of the software for devices corresponding to the control software version information are given to correspond to each other for each piece of software for devices.

The control software version information in this case is, for example, a version "1.0.1". Version information of the software for devices of the device 3-1 corresponding to the version of the control software 10 is, for example, "1.2.1". Version information of the software for devices of the device 3-2 corresponding to the version of the control software 10 is, for example, "≥1.0.1". "≥1.0.1" means that the version information only has to be a version "1.0.1" or higher. Version information of the software for devices of the device 3-3 corresponding to the version of the control software 10 is, for example, "*". "*" means that the version information may be any version. The same applies to the devices 3-4 to 3-18 and version information of the software for devices is given to each of the devices. Note that, in the example shown in the figure, it is assumed that each of the devices 3 uses, for example, one piece of software for devices. Therefore, the version information is given to each of the devices. However, if one or a plurality of pieces of software for devices are used by each of the devices 3, the version correspondence information 10a is given to each piece of software for devices. In the version correspondence information 10a, version information of the software for devices consistent with the control software 10 of the version "1.0.1" is tabulated and given.

The example of the content shown in FIG. 7(b) is the same as the example of the content shown in FIG. 7(a). In FIG. 7(b), the control software 11 includes version correspondence information 11a besides a principal command code. In the version correspondence information 11a, control software version information, which is own version information of the control software 11, and version information of the software for devices corresponding to the control software version information are given to correspond to each other for each piece of software for devices.

The control software version information in this case is, for example, a version "1.0.2". That is, the version of the control software is newer than the version of the control software 10. Version information of the software for devices of the device 3-1 corresponding to the version of the control software 11 is, for example, "1.2.2". Version information of the software for devices of the device 3-2 corresponding to the version of the control software 11 is, for example, "≥1.0.2". Version information of the software for devices of the device 3-3 corresponding to the version of the control software 11 is, for example, "*". The same applies to the devices 3-4 to 3-18 and version information of the software for devices is given to each of the devices. In the version correspondence information 11a, version information of the software for devices consistent with the control software 11 of the version "1.0.2" is tabulated and given.

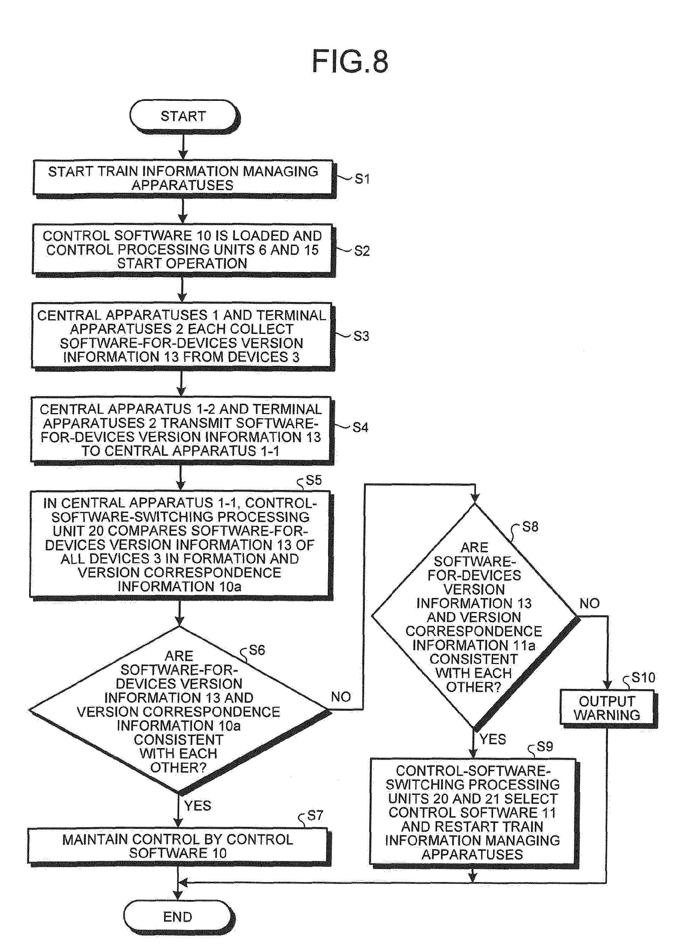

FIG. 8 is a flowchart explaining an operation in the present embodiment. When the train information managing apparatuses (the central apparatuses 1 and the terminal apparatuses 2) are started (S1), in the train information managing apparatuses, either one of the control software 10 and the control software 11 is selected by default and loaded to the main memory. Which one of the control software 10 and the control software 11 is selected depends on the setting. In the following explanation, for example, it is assumed that the control software 10 is set to be selected. Note that an operation performed when the control software 11 is set to be selected can be explained in a similar manner.

In the central apparatuses 1, the control software 10 is loaded from the storing unit 9 and the control processing unit 6 starts an operation according to the control software 10 (S2). In the terminal apparatuses 2, the control software 10 is loaded from the storing unit 18 and the control processing unit 15 starts an operation according to the control software 10 (S2).

Subsequently, the central apparatuses 1 collect the software-for-devices version information 13 from the devices 3 in their own car (S3). Specifically, the control processing unit 6 acquires the software-for-devices version information 13 as part of the state data (device information) included in the state data signal SD. Consequently, it is unnecessary to separately perform transmission of the software-for-devices version information 13. However, the devices 3 can also transmit the software-for-devices version information 13 separately from the state data signal SD. The terminal apparatuses 2 collect the software-for-devices version information 13 from the devices 3 in their own car (S3). Specifically, the control processing unit 15 acquires the software-for-devices version information 13 as part of the state data (device information) included in the state data signal SD. Consequently, it is unnecessary to separately perform transmission of the software-for-devices version information 13. However, the devices 3 can also transmit the software-for-devices version information 13 separately from the state data signal SD.

Subsequently, the central apparatus 1-2 stores the software-for-devices version information 13 collected from the devices 3 in its own car in the storing unit 9 and transmits the software-for-devices version information 13 to the central apparatus 1-1 of the head car (S4). In transmitting the software-for-devices version information 13, the central apparatus 1-2 can transmit the software-for-devices version information 13 to the central apparatus 1-1 of the head car as, for example, part of the state data (device information). The terminal apparatuses 2 store the software-for-devices version information 13 collected from the devices 3 in their own car in the storing units 18 and transmit the software-for-devices version information 13 to the central apparatus 1-1 of the head car (S4). In transmitting the software-for-devices version information 13, the terminal apparatuses 2 can transmit the software-for-devices version information 13 to the central apparatus 1-1 of the head car as, for example, part of the state data (device information).

On the other hand, the central apparatus 1-1 stores the software-for-devices version information 13 collected from the devices 3 in its own car in the storing unit 9 and further stores the software-for-devices version information 13 received from the central apparatus 1-2 and the terminal apparatuses 2 in the storing unit 9. Consequently, the central apparatus 1-1 acquires the software-for-devices version information 13 concerning all the devices 3 in the formation.

Subsequently, in the central apparatus 1-1, the control-software-switching processing unit 20 compares the software-for-devices version information 13 of all the devices 3 in the formation and the version correspondence information 10a (S5). That is, the control-software-switching processing unit 20 can compare the software-for-devices version information 13 of all the devices 3 in the formation and the version correspondence information 10a included in the control software 10.

Subsequently, the control-software-switching processing unit 20 determines whether the software-for-devices version information 13 and the version correspondence information 10a are consistent with each other (S6). Specifically, the control-software-switching processing unit 20 checks a correspondence relation with the version correspondence information 10a for each piece of the software-for-devices version information 13. The control-software-switching processing unit 20 determines that the software-for-devices version information 13 and the version correspondence information 10a are consistent with each other only when all the pieces of the software-for-devices version information 13 are consistent with the version correspondence information 10a. The control-software-switching processing unit 20 determines that the software-for-devices version information 13 and the version correspondence information 10a are inconsistent with each other when even one piece of the software-for-devices version information 13 is inconsistent with the version correspondence information 10a.

As a result of the determination, when all the pieces of the software-for-devices version information 13 and the version correspondence information 10a are consistent with each other (Yes at S6), the control-software-switching processing unit 20 maintains the control by the control software 10 (S7). That is, the control-software-switching processing unit 20 does not perform processing for switching to the control software 11.

As a result of the determination, when all the pieces of the software-for-devices version information 13 and the version correspondence information 10a are not consistent with each other (No at S6), the control-software-switching processing unit 20 further refers to the other control software 11 stored in the storing unit 9 and determines whether all the pieces of the software-for-devices version information 13 and the version correspondence information 11a are consistent with each other (S8). When all the pieces of the software-for-devices version information 13 and the version correspondence information 11a are consistent with each other (Yes at S8), the control-software-switching processing unit 20 transmits a switching command for switching from the control software 10 to the control software 11 to the terminal apparatuses 2 and the central apparatus 1-2 via the trunk transmission line 4. Thereafter, to perform the processing for switching from the control software 10 to the control software 11 for itself, the control-software-switching processing unit 20 itself selects and sets the control software 11 as default control software during a start and restarts the central apparatus 1-1 (S9). In the central apparatus 1-1, after the restart, the control software 11 is loaded from the storing unit 9. The control processing unit 6 starts an operation according to the control software 11. On the other hand, in the terminal apparatuses 2 that receive the switching command from the central apparatus 1-1, the control-software-switching processing unit 21 selects and sets the control software 11 as default control software during a start and restarts the terminal apparatuses 2 (S9). In the terminal apparatuses 2, after the restart, the control software 11 is downloaded from the storing unit 18 and the control processing unit 15 starts an operation according to the control software 11. In the central apparatus 1-2 that receives the switching command from the central apparatus 1-1, the control-software-switching processing unit 20 selects and sets the control software 11 as default control software during a start and restarts the central apparatus 1-2 (S9). In the central apparatus 1-2, after the restart, the control software is loaded from the storing unit 9 and the control processing unit 6 starts an operation according to the control software 11.

As a result of the determination at S8, when all the pieces of the software-for-devices version information 13 and the version correspondence information 11a are not consistent with each other (No at S8), the control-software-switching processing unit 20 outputs a warning without performing the control software switching processing (S10). Note that, because the train information managing apparatus includes a display unit (not shown in the figures), the central apparatus 1-1 can perform, for example, on the display unit, warning display indicating that control software consistent with all the pieces of the software-for-devices version information 13 is absent. Note that the warning is not limited to the display and can be performed by sound.

As explained above, according to the present embodiment, the train information managing apparatus (the central apparatus 1 and the terminal apparatus 2) verifies consistency of a version of the software for devices of the devices 3 and a version of the control software of the train information managing apparatus and then automatically selects and starts the control software of a consistent version. Therefore, when improvement of functions related to each other in the control software of the train information managing apparatus and the software for devices is carried out, it is possible to prevent a situation in which consistency of versions cannot be attained between control software of the train information managing apparatus and software for devices and a deficiency occurs.

In the present embodiment, for example, functions after improvement of the software for devices are given to the control software 11 in advance assuming version update in future. On the other hand, the control software 10 of an old version is used to perform control until version update of the software for devices is actually performed. After the version update of the software for devices is actually performed, the control software 10 of the old version is switched to the control software 11 of a new version. Therefore, it is not always necessary to simultaneously perform version update of software in the train information managing apparatus and the devices.

On the other hand, conventionally, it is necessary to perform version update of the control software of the train information managing apparatus and the software for devices at the same time. Because this work requires human labor, actually, the version update is sometimes performed without synchronizing the control software of the train information managing apparatus and the software for devices because of some mistake or the like. In that case, inconsistency of versions causes a deficiency.

Note that, in the present embodiment, the central apparatuses 1 and the terminal apparatuses 2 can each switch and start the new and old two pieces of the control software 10 and 11 of different versions. However, the central apparatuses 1 and the terminal apparatuses 2 are not limited to this and can switch and start three or more pieces of control software of different versions. In this case, these pieces of control software each include version correspondence information. The central apparatus 1-1 discriminates, out of a plurality of pieces of control software, control software including version correspondence information consistent with the software-for-devices version information of all the devices 3. When the discriminated control software is different from already-started control software, the central apparatus 1-1 selects and starts the discriminated control software and transmits a switching command for switching from the already-started control software to the discriminated control software to the central apparatus 1-2 and the terminal apparatuses 2. Note that, when the central apparatus 1-1 cannot discriminate control software including version correspondence information consistent with the software-for-devices version information of all the devices 3, that is, when control software including version correspondence information consistent with the software-for-devices version information of all the devices 3 is absent, the central apparatus 1-1 outputs a warning without performing the control software switching processing.

In the present embodiment, the determination of consistency of software is performed in the central apparatus 1-1, which is a so-called primary station. However, the determination of consistency of software can be performed in the central apparatus 1-2, which is a secondary station, or can be performed in the terminal apparatus 2.

In the present embodiment, the determination of consistency of software is performed by comparing version information. However, it is also possible that, instead of using specific version information, key information for identifying a difference in a version of the software for devices is transmitted from the devices 3 to the train information managing apparatus and, on the other hand, key correspondence information for each piece of software for devices is embedded in respective pieces of control software, and the central apparatus 1-1 compares key information of all the pieces of software for devices and key correspondence information included in the control software and selects consistent control software. The key information is, for example, a sign.

In the present embodiment, the device information including the software-for-devices version information 13 is transmitted from the devices 3 to the train information managing apparatus. However, the device information including checksum value information of the software for devices in addition to the software-for-devices version information 13 can be transmitted. Further, the device information including the checksum value information of the software for devices in addition to the software-for-devices version information 13 can be transmitted from the central apparatus 1-2 and the terminal apparatuses 2 to the central apparatus 1-1. The software-for-devices version information 13 and the checksum value information concerning all the devices 3 in the formation can be collected in the central apparatus 1-1. In accordance with this, in the control software 10 and 11, in addition to the version correspondence information 10a and 11a, checksum value correspondence information obtained by tabulating a checksum value of the software for devices for each piece of software for devices is included. The central apparatus 1-1 performs not only determination of consistency of the software-for-devices version information 13 and the version correspondence information 10a but also determination of consistency of the checksum value information of the software for devices and the checksum value correspondence information included in the control software. The central apparatus 1-1 performs selection processing for control software in which the software-for-devices version information 13 and the version correspondence information 10a are consistent with each other and the checksum value information of the software for devices and the checksum value correspondence information are consistent with each other. Consequently, it is possible to verify, with a checksum value calculated according to substantial content of the software for devices, whether the control software applied to the train information managing apparatus is consistent with the software for devices. Therefore, it is possible to perform verification of consistency with higher reliability.

### Industrial Applicability

As explained above, the present invention is useful as a train information managing apparatus and a selection method for control software for the train information managing apparatus.

### Reference Signs List

1 Central apparatus
2 Terminal apparatus
3 Device
4 Trunk transmission line
5 Branch transmission line
6, 15 Control processing units
7, 8, 16, 17 Transmitting and receiving units
9, 18 Storing units
10, 11 Control software
10a, 11a Version correspondence information
12, 19 State data
13 Software-for-devices version information
20, 21 Control-software-switching processing units

## Claims

1. A train information managing apparatus that is mounted on each of cars of a formation of a train, that collects device information from a device in its own car, that transmits and receives the device information to and from another train information managing apparatus via a trunk transmission line wired among the cars, and that shares the device information with another train information apparatus and manages the device information, the apparatus comprising:
a storing unit that stores a plurality of pieces of control software that are software of versions different from each other applied to the train information managing apparatus and that each include version correspondence information that gives, for each piece of software for devices used in devices in the formation, version information of the software for devices corresponding to a version of own software; and
a control processing unit that collects version information of the software for devices from devices in its own car, transmits the version information of the software for devices to another train information managing apparatus via the trunk transmission line, has a function of selecting one piece of control software common among the cars out of the plurality of pieces of control software stored in the storing unit and starting the control software, and operates according to the selected control software after the start, wherein
the control processing unit of the train information managing apparatus mounted on a head car of the formation compares version information of the software for devices concerning all the devices in the formation and version correspondence information included in each of the plurality of pieces of control software stored in the storing unit, discriminates control software including version correspondence information consistent with the version information of the software for devices concerning all the devices in the formation, when the discriminated control software is different from already-started control software, selects and starts the discriminated control software, and transmits a switching command for switching from the already-started control software to the discriminated control software to a train information managing apparatus mounted on another car.

2. The train information managing apparatus according to claim 1, wherein the control processing unit of the train information managing apparatus mounted on the head car of the formation compares the version information of the software for devices concerning all the devices in the formation and the version correspondence information included in each of the plurality of pieces of control software stored in the storing unit and, when control software including version correspondence information consistent with the version information of the software for devices concerning all the devices in the formation is not capable of being discriminated, outputs a warning without performing switching of the control software.

3. The train information managing apparatus according to claim 1, wherein
the device transmits the device information including version information of the software for devices to the train information managing apparatus in its own car, and
the train information managing apparatus transmits the device information including the version information of the software for devices to a train information managing apparatus in another car.

4. The train information managing apparatus according to claim 1, wherein
each of the plurality of pieces of control software includes, in addition to the version correspondence information, checksum value correspondence information that gives, for each piece of software for devices, checksum value information of the software for devices corresponding to a version of own software,
the control processing unit collects the checksum value information in addition to the version information of the software for devices from devices in its own car and transmits the version information and the checksum value information of the software for devices to another train information managing apparatus via the trunk transmission line, and
the control processing unit of the train information managing apparatus mounted on the head car compares version information and checksum value information of the software for devices concerning all the devices in the formation and version correspondence information and checksum value correspondence information included in each of the plurality of pieces of control software stored in the storing unit, discriminates control software including version correspondence information and checksum value correspondence information consistent with the version information and the checksum value information of the software for devices concerning all the devices in the formation, when the discriminated control software is different from the already-started control software, selects and starts the discriminated control software, and transmits a switching command for switching from the already-started control software to the discriminated control software to a train information managing apparatus mounted on another car.

5. The train information managing apparatus according to claim 4, wherein
the device transmits the device information including version information and checksum value information of the software for devices to the train information managing apparatus in its own car, and
the train information managing apparatus transmits the device information including the version information and the checksum value information of the software for devices to a train information managing apparatus in another car.

6. A selection method for control software of a train information managing apparatus that is mounted on each of cars of a formation of a train, that collects device information from a device in its own car, that transmits and receives the device information to and from another train information managing apparatus via a trunk transmission line wired among the cars, and that shares the device information with another train information apparatus and manages the device information, the train information managing apparatus including: a storing unit that stores a plurality of pieces of control software that are software of versions different from each other applied to the train information managing apparatus and that each include version correspondence information that gives, for each piece of software for devices used in devices in the formation, version information of the software for devices corresponding to a version of own software; and a control processing unit that collects version information of the software for devices from devices in its own car, transmits the version information of the software for devices to another train information managing apparatus via the trunk transmission line, has a function of selecting one piece of control software common among the cars out of the plurality of pieces of control software stored in the storing unit and starting the control software, and operates according to the selected control software after the start, the selection method comprising:
a step of the control processing unit of the train information managing apparatus mounted on a head car comparing version information of the software for devices concerning all the devices in the formation and version correspondence information included in each of the plurality of pieces of control software stored in the storing unit;
a step of the control processing unit discriminating control software including version correspondence information consistent with the version information of the software for devices concerning all the devices in the formation; and
a step of the control processing unit selecting and starting, when the discriminated control software is different from already-started control software, the discriminated control software and transmitting a switching command for switching from the already-started control software to the discriminated control software to a train information managing apparatus mounted on another car.
